Europäisches Patentamt

European Patent Office

Office européen des brevets

(11) Veröffentlichungsnummer: **0 302 064**
**B1**

# EUROPÄISCHE PATENTSCHRIFT

(45) Veröffentlichungstag der Patentschrift:
20.12.89

(21) Anmeldenummer: 87902043.6

(22) Anmeldetag: 19.03.87

(86) Internationale Anmeldenummer:
PCT/DE 87/00115

(87) Internationale Veröffentlichungsnummer:
WO 87/06303 (22.10.87 Gazette 87/23)

(51) Int. Cl.⁴: **F 02 D 41/14, F 02 D 41/40**

(54) ANORDNUNG ZUR ERFASSUNG DES SPRITZBEGINNS BEI EINER DIESELBRENNKRAFTMASCHINE.

(30) Priorität: 16.04.86 DE 3612808

(43) Veröffentlichungstag der Anmeldung:
08.02.89 Patentblatt 89/6

(45) Bekanntmachung des Hinweises auf die Patenterteilung:
20.12.89 Patentblatt 89/51

(84) Benannte Vertragsstaaten:
DE FR GB IT

(56) Entgegenhaltungen:
EP-A- 0 078 987
FR-A- 2 323 182
US-A- 3 973 529
US-A- 4 185 494

(73) Patentinhaber: ROBERT BOSCH GMBH, Postfach 50,
D-7000 Stuttgart 1 (DE)

(72) Erfinder: KÜTTNER, Thomas, Lindenbachstr. 69,
D-7000 Stuttgart 31 (DE)
Erfinder: STÜNKEL, Rolf, Muggensturmerstr. 25,
D-7000 Stuttgart 31 (DE)
Erfinder: WESSEL, Wolf, Mühlstr. 27,
D-7141 Oberriexingen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einer Anordnung zur Erfassung des Spritzbeginns bei einer Dieselbrennkraftmaschine nach dem ersten Teil des Anspruchs 1.

Eine derartige Anordnung ist bereits aus der US-A-4 185 494 bekannt.

Die US-A-4 185 494 zeigt und beschreibt eine Anordnung zum Erfassen des Spritzbeginns, wobei das Druckschwellensignal aus dem Mittelwert des Drucksignals der vorhergehenden Einspritzperiode gebildet ist.

Gemäss FR-A-2 323 182 wird das Einspritzende an einer Dieseleinspritzdüse aufgrund einer Druckamplitude von Druckschwingungen oberhalb von 500 Hz erkannt. Diese Druckamplitude wird mit einem Schwellwert verglichen, der aus dem Spitzenwert des vorhergehenden Einspritzendes abgeleitet ist.

Weiterhin ist aus der Druckschrift MTZ 1964, Heft 7, Seiten 292 ff., ein Messgerät zur Ermittlung des dynamischen Förderbeginns von Dieselmotoren bekannt. Auch hier dient das Messgerät vorzugsweise zur Auslösung einer Stroboskoplampe. Der in einer Einspritzleitung der Dieselbrennkraftmaschine erfasste Druck wird von einem magnetostriktiven Geber in ein entsprechendes elektrisches Drucksignal umgeformt, das zunächst differenziert und dann auf eine Schaltstufe gegeben wird, dessen Ausgangssignal das Auslösesignal für die Stroboskoplampe darstellt. Zur Verhinderung von Mehrfachauslösungen der Stroboskoplampe ist der Schaltstufe eine Torstufe vorgeschaltet, die über eine monostabile Kippstufe die Torstufe betätigt.

Derartige Anordnungen zur Erfassung des Spritzbeginns finden aber auch Anwendung bei Einspritzregelungen für Dieselbrennkraftmaschinen, wie sie beispielsweise aus der US-PS 4 265 200 bekannt sind. Derartige Einspritzregelungen benötigen als Istgrösse den tatsächlichen Spritzbeginn. Häufig werden hierfür sogenannte Nadelhubgeber verwendet, die die Bewegung der Nadel der Einspritzdüse erfassen und damit den tatsächlichen Spritzbeginn. Die Einspritzdüse wird dadurch natürlich komplizierter im Aufbau und somit teurer, gleichzeitig wird der Platzbedarf für die Einspritzdüse grösser, da der Nadelhubgeber im Einspritzventilgehäuse ebenfalls mit seinen elektrischen Anschlüssen Platz finden muss. Aus diesen nachteiligen Gründen ist es manchmal notwendig, auf einen Nadelhubgeber zu verzichten.

Der vorliegenden Erfindung liegt daher die Aufgabe zugrunde, eine Anordnung zur Erfassung des Spritzbeginns bei einer Dieselbrennkraftmaschine zu finden, die ohne einen Nadelhubgeber auskommt und besonders für eine Einspritzregelung geeignet ist.

Gelöst wird die Aufgabe durch die erfindungsgemässe Anordnung mit den Merkmalen des Anspruchs 1.

### Vorteile der Erfindung

Die erfindungsgemässe Anordnung zur Erfassung des Spritzbeginns bei einer Dieselbrennkraftmaschine mit den Merkmalen des Hauptanspruchs hat den besonderen Vorteil, dass sie in besonders einfacher Weise eine selbsttätige Adaption des Druckschwellensignals an einen variablen Signalpegel des Drucksignals ermöglicht. Es wird daher eine über weite Betriebsbereiche der Dieselbrennkraftmaschine konstante Sicherheit gegenüber fehlerhaften Erfassungen eines Spritzbeginns erreicht. Dies ist insbesondere bei schnell laufenden Dieselbrennkraftmaschinen vorteilhaft, die beachtliche Druckschwingungen in den Einspritzleitungen aufweisen können.

Besonders vorteilhafte Weiterbildungen der erfindungsgemässen Anordnung sind in den abhängigen Ansprüchen angegeben. So ist die Anordnung dafür geeignet, eine besonders einfache Beeinflussung durch Betriebsparameter der Dieselbrennkraftmaschine zu ermöglichen, was insbesondere im Schiebebetrieb oder bei hohen Drehzahlen zur Vermeidung von Fehlerfassungen eines Spritzbeginns eingesetzt werden kann. Eine besonders einfache Massnahme besteht weiterhin darin, das Druckschwellensignal nach dem Ausbleiben eines Einspritzsignals auf einen festen niederen Wert zu setzen, um dadurch den nächsten Spritzbeginn besonders sicher zu erfassen. Bleiben während eines Schiebebetriebs jedoch mehrere Einspritzsignale nacheinander aus, so gestattet es die Anordnung in besonders einfacher Weise, eine Ausblendung des ersten auftretenden Einspritzsignales durchzuführen. Dadurch kann eine fehlerhafte Spritzbeginnerfassung vermieden werden, die durch eine Volumenfüllung und einen Druckaufbau innerhalb des elastischen Dieselkraftstoffs verursacht ist.

### Zeichnung

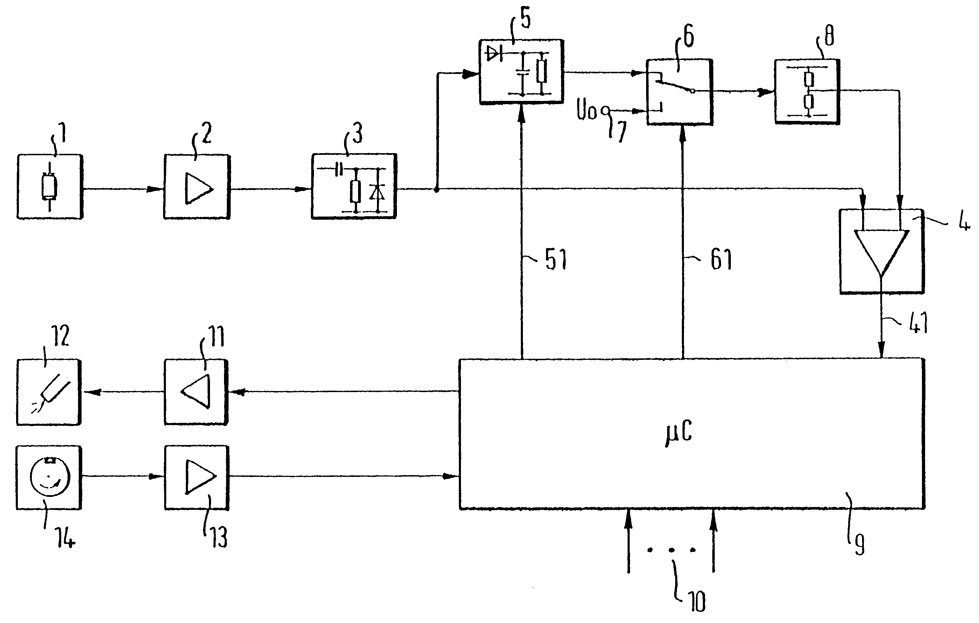

Ein Ausführungsbeispiel der Erfindung ist in der Zeichnung dargestellt und in der nachfolgenden Beschreibung näher erläutert. Die einzige Figur stellt ein vereinfachtes Blockschaltbild des bevorzugten Ausführungsbeispiels dar.

### Beschreibung des Ausführungsbeispiels

In der Zeichnung ist ein Druckgeber 1 dargestellt, dessen Ausgangssignal auf einen Trennverstärker 2 führt. Diesem ist eine Klemmschaltung 3 nachgeschaltet, deren Ausgang wiederum auf den Pluseingang eines Komparators 4 und den Eingang eines Spitzenwertgleichrichters 5 führt. Der Ausgang des Spitzenwertgleichrichters 5 ist mit einem ersten Kontakt eines Schalters 6 verbunden, dessen zweiter Kontakt mit einer Klemme 7 verbunden ist. Der Schaltkontakt des Schalters 6 führt auf einen Spannungsteiler 8, dessen Ausgang wiederum mit dem Minuseingang des Komparators 4 verbunden ist. Der Ausgang des Komparators 4 führt auf einen als Steuergerät der Anordnung wirkenden Mikrocomputer 9, der weitere Eingänge 10 besitzt. Der Mikrocomputer 9 steuert über eine Treiberstufe 11 ein Einspritzsystem 12 an, während er gleichzeitig über eine Auswertestufe 13 Signale von einem Drehzahlgeber 14 erhält. Weiterhin ist in der Zeichnung eine Verbindungsleitung vom Komparator 4 zum Mikrocomputer 9 mit 41, vom Mikrocomputer 9 zum Spitzenwertgleichrichter 5 und vom Mikrocomputer 9 zum Schalter 6 mit 61 bezeichnet.

Das in der Zeichnung dargestellte Blockschaltbild stellt ein System für eine elektronische Einspritzregelung für eine Dieselbrennkraftmaschine dar. Und zwar werden sowohl die benötigte Einspritzmenge als auch der Einspritzzeitpunkt vom Mikrocomputer 9 über die Treiberstufe 11 für das Einspritzsystem 12 eingestellt. Hierfür erhält der Mikrocomputer 9 über die Eingänge 10 Informationen über aktuelle Betriebsparameter der Dieselbrennkraftmaschine, wie insbesondere Temperatur, Lastzustand und Fahrpedalposition. Weiterhin erhält der Mikrocomputer 9 über den Drehzahlgeber 14 und die Auswertestufe 13 eine Information über die Drehzahl und den aktuellen Kurbelwellenwinkel. Derartige elektronische Regelungen für Dieselbrennkraftmaschinen sind vielfach aus dem Stand der Technik bekannt und zur Vereinfachung der Darstellung darum hier nicht näher erläutert.

Da das Einspritzsystem 12 dem Mikrocomputer 9 keine Information über den Spritzbeginn mitteilt, wird der Spritzbeginn über den von der Einspritzpumpe ausgangsseitig gelieferten Druck indirekt ermittelt. Hierfür ist der piezokeramische Druckgeber 1 vorgesehen, der ein druckproportionales Spannungssignal (Drucksignal) auf den hochohmigen Eingang des Trennverstärkers 2 liefert. Die dem Trennverstärker 2 nachgeschaltete elektronische Klemmschaltung 3 sorgt in bekannter Weise dafür, dass eine eindeutige Nullpunktlage des Drucksignals vorhanden ist. Weiterhin werden dadurch Fertigungstoleranzen, Temperaturdriften und ein eventuell ungenauer Abgleich von Druckgeber 1 und Trennverstärker 2 in besonders vorteilhafter Weise unwirksam. Während der Nullpunktklemmung durch die Klemmschaltung 3 sind Störeinflüsse vom Druckgeber 1 und von den Zuleitungen stark bedämpft.

Der Spitzenwertgleichrichter 5 erhält von der Klemmschaltung 3 das mit der Spritzfolge der Dieselbrennkraftmaschine periodische Drucksignal, und hält in bekannter Weise dessen Spitzenwertpegel fest. Im Normalbetrieb ist der Schalter 6 so geschaltet, dass der Ausgang des Spitzenwertgleichrichters 5 direkt auf den Spannungsteiler 8 führt. Der Spannungsteiler 8 teilt den vom Spitzenwertgleichrichter 5 erhaltenen Spitzenwertpegel auf einen Bruchteil herunter und gibt diesen Wert auf den Minuseingang des Komparators 4. Da der Pluseingang des Komparators 4 direkt mit dem Ausgang der Klemmschaltung 3 verbunden ist, erscheint an seinem Ausgang genau dann eine positive Signalflanke, wenn das Ausgangssignal der Klemmschaltung 3 genau den Bruchteil des Spitzenwertpegels des vorhergehenden Drucksignals erreicht.

Die Leitung 41 führt vom Komparator 4 auf einen Interrupt-Eingang des Mikrocomputers 9. Bei Erscheinen eines positiven Signals am Ausgang des Komparators 4 unterbricht daher der Mikrocomputer 9 sein laufendes Programm und führt eine Interrupt-Routine aus. Der Mikrocomputer 9 enthält einen internen Zähler, der bei Erscheinen einer Bezugsmarke am Drehzahlgeber 14 und eines entsprechenden Signals am Ausgang der Auswertestufe 13 jedesmal zurückgesetzt und neu gestartet wird. Der am Ende erreichte Zählerstand ist umgekehrt proportional zur Drehzahl der Dieselbrennkraftmaschine. Der Zähler stellt damit sozusagen die «Uhr» der Anordnung dar. Die vom Komparator 4 angestossene Interrupt-Routine liest nun den Zähler und hält den gelesenen Wert als Zeitmass für den Spritzbeginn fest. Weiterhin wird über die Leitung 51 der Spitzenwertgleichrichter 5 für die folgende Einspritzperiode gelöscht.

Erscheint nun innerhalb einer Periode, d. h. während eines Umlaufs des Geberrads am Drehzahlgeber 14 kein Impuls am Ausgang des Komparators 4, so schaltet der Mikrocomputer 9 für die folgende Periode über die Leitung 61 den Schalter 6 um, so dass eine an der Klemme 7 anliegende niedere Spannung über den Spannungsteiler 8 auf den Minuseingang des Komparators 4 gelangt. Dadurch wird eine sichere Erkennung des Förderbeginns gewährleistet, wenn die Dieselbrennkraftmaschine sich im Übergang vom Last- zum Schiebebetrieb befindet.

Erscheint während mehrerer aufeinanderfolgender Perioden kein Impuls am Ausgang des Komparators 4, so erkennt der Mikrocomputer 9 einen dauernden Schiebebetrieb der Dieselbrennkraftmaschine und steuert dementsprechend in bekannter Weise die hierfür vorgesehenen Funktionen des Einspritzsystems 12 an.

Am Ende des Schiebebetriebs, d. h. bei Wiederbetätigung des Fahrpedals, wird der erste, vom Komparator 4 gelieferte Impuls nicht zur Spritzbeginnauswertung herangezogen. Damit wird eine inkorrekte Auswertung verhindert, die durch die nach dem Schiebebetrieb notwendige Volumenfüllung und den Druckaufbau im Dieselkraftstoff verursacht werden könnte.

## Patentansprüche

1. Anordnung zur Erfassung des Spritzbeginns bei einer Dieselbrennkraftmaschine mit einem Druckgeber, der den Druckverlauf an einer dem Einspritzdruck ausgesetzten Stelle erfasst und ein entsprechendes Drucksignal bildet, wobei weiterhin ein Druckschwellensignal vorgegeben ist, das aus Drucksignalen einer vorhergehenden Einspritzperiode gebildet wird, und dass ein Einspritzsignal gebildet wird, wenn das Drucksignal das Druckschwellensignal in vorgegebener Weise überschreitet, dadurch gekennzeichnet, dass das Druckschwellensignal aus dem ermittelten Spitzenwert des Drucksignals der vorhergehenden Einspritzperiode gebildet wird.

2. Anordnung nach Anspruch 1, dadurch gekennzeichnet, dass das Druckschwellensignal aus einem Teil des Spitzenwerts des Drucksignals der vorhergehenden Einspritzperiode gebildet wird.

3. Anordnung nach Anspruch 2, dadurch gekennzeichnet, dass der Teil abhängig von wenigstens einem Betriebsparameter, vorzugsweise der Last der Dieselbrennkraftmaschine gehalten ist.

4. Anordnung nach einem der vorhergehenden Ansprüche, dadurch gekennzeichnet, dass das Druckschwellensignal nach Ausbleiben eines Einspritzsignals auf einen festen niederen Wert gesetzt wird.

5. Anordnung nach einem der vorhergehenden Ansprüche, dadurch gekennzeichnet, dass das erste Einspritzsignal ausgeblendet wird, das auf einen Schiebebetrieb folgt.

## Claims

1. Device for detecting the start of injection in a diesel internal-combustion engine with a pressure transmitter which detects the pressure change at a point exposed to the injection pressure and which forms a corresponding pressure signal, there being predetermined, furthermore, a pressure-threshold signal which is formed from pressure signals of a preceding injection period, an injection signal being formed when the pressure signal exceeds the pressure-threshold signal in a predetermined way, characterized in that the pressure-threshold signal is formed from the determined peak value of the pressure signal of the preceding injection period.

2. Device according to Claim 1, characterized in that the pressure-threshold signal is formed from part of the peak value of the pressure signal of the preceding injection period.

3. Device according to Claim 2, characterized in that the part is made dependent on at least one operating parameter, preferably the load of the diesel internal-combustion engine.

4. Device according to one of the preceding claims, characterized in that the pressure-threshold signal is set at a fixed low value after the absence of an injection signal.

5. Device according to one of the preceding claims, characterized in that the first injection signal following a coasting state is tuned out.

## Revendications

1. Dispositif pour détecter le début de l'injection dans un moteur diesel, dispositif comportant un indicateur de pression qui détecte l'évolution de la pression à un emplacement exposé à la pression d'injection et qui forme un signal de pression correspondant, un signal de seuil de pression étant en outre prédéfini qui est formé à partir des signaux de pression d'une période d'injection précédente, et un signal d'injection étant formé lorsque le signal de pression dépasse, d'une façon prédéfinie, le signal de seuil de pression, dispositif caractérisé en ce que le signal de seuil de pression est formé à partir de la valeur de pointe, éventuellement pondérée, du signal de pression de la période d'injection précédente.

2. Dispositif selon la revendication 1, caractérisé en ce que le signal de seuil de pression est formé à partir d'une partie de la valeur de pointe du signal de pression de la période d'injection précédente.

3. Dispositif selon la revendication 2, caractérisé en ce que la partie dépendant d'au moins un paramètre de fonctionnement, de préférence la charge du moteur diesel, est retenue.

4. Dispositif selon une des précédentes revendications, caractérisé en ce que le signal de seuil de pression, après l'absence d'un signal d'injection, est placé à une valeur fixe réduite.

5. Dispositif selon une des précédentes revendications, caractérisé en ce que le premier signal d'injection faisant suite à un fonctionnement en poussée est supprimé.